# EUROPÄISCHE PATENTSCHRIFT

(11) **EP 2 391 908 B1**
(45) Veröffentlichungstag und Bekanntmachung des Hinweises auf die Patenterteilung: **27.03.2013**
(21) Anmeldenummer: 09764499.1
(22) Anmeldetag: 01.12.2009
(51) Int. Cl.: G01S 7/41, G01S 13/93, G01S 13/95

(54) **VERFAHREN ZUR DETEKTION VON NIEDERSCHLAG MIT EINEM RADARORTUNGSGERÄT FÜR KRAFTFAHRZEUGE**
METHOD FOR THE DETECTION OF PRECIPITATION USING A RADAR LOCATING DEVICE FOR MOTOR VEHICLES
PROCÉDÉ POUR DÉTECTER DES PRÉCIPITATIONS AU MOYEN D'UN DISPOSITIF DE LOCALISATION PAR RADAR POUR DES VÉHICULES À MOTEUR

(30) Priorität: 29.01.2009 DE 102009000472
(43) Veröffentlichungstag der Anmeldung: 07.12.2011
(73) Patentinhaber: Robert Bosch GmbH, 70442 Stuttgart (DE)
(72) Erfinder: HEILMANN, Stefan, Leonberg 71229 (DE); BECHLER, Dirk, Karlsruhe 76185 (DE)
(86) Internationale Anmeldenummer: PCT/EP2009/066147
(87) Internationale Veröffentlichungsnummer: WO 2010/086048

(56) Entgegenhaltungen:
- DE-A1-102006 054 320
- JP-A- 4 309 883
- BLAKE S: "OS-CFAR theory for multiple targets and nonuniform clutter" IEEE TRANSACTIONS ON AEROSPACE AND ELECTRONIC SYSTEMS, Bd. 24, Nr. 6, November 1988 (1988-11), Seiten 785-790, XP002564047 USA ISSN: 0018-9251

## Beschreibung

### Stand der Technik

Die Erfindung betrifft ein Verfahren zur Detektion von Niederschlag mit einem Radarortungsgerät für Kraftfahrzeuge, das zur Ortung von Objekten im Umfeld des Fahrzeugs ausgebildet ist, bei welchem Verfahren ein Ortungssignal, das ein Maß für die empfangene Leistungsdichte als Funktion des Abstands darstellt, über einen ersten Abstandsbereich integriert wird, der unterhalb eines Grenzabstands für die Detektion von Niederschlag liegt.

Radarortungsgeräte werden häufig in Fahrerassistenzsystemen für Kraftfahrzeuge eingesetzt, beispielsweise für eine automatische Abstandsregelung oder zur frühzeitigen Erkennung einer Kollisionsgefahr.

Niederschlag in der Form von Regen oder auch von der Straße aufspritzende Gischt kann einen Teil der emittierten Radarstrahlung reflektieren und so eine Verringerung der Reichweite der Radarstrahlung und damit eine Verringerung der Ortungstiefe des Radarsensors verursachen. Aus Gründen der Verkehrssicherheit ist es wichtig, daß eine solche Einschränkung der Funktion des Radarortungsgerätes möglichst unverzüglich festgestellt werden kann.

DE 10 2006 054 320 A1 beschreibt ein Verfahren der eingangs genannten Art für ein Mehrstrahlradar, speziell für ein FMCW-Radarortungsgerät. Bei diesem Verfahren werden die Ortungssignale mehrerer Radarstrahlen jeweils gesondert integriert, und die resultierenden Integrale werden miteinander verglichen.

Das Funktionsprinzip eines FMCW-Radarortungsgerätes (Frequency Modulated Continuous Wave) besteht darin, daß das Radarsignal kontinuierlich ausgesendet wird, jedoch die Frequenz dieses Signals periodisch mit steigenden und fallenden Rampen moduliert wird (der Bergriff "Rampe" soll hier nicht bedeuten, daß die Frequenzmoduation innerhalb der "Rampe" zwingend linear sein muß). Ein Mischer mischt einen Teil des Sendesignals mit dem von der Antenne empfangenen Signal und erzeugt so ein Mischprodukt, dessen Frequenz der Differenz zwischen der Frequenz des aktuellen Sendesignals und der Frequenz des empfangen Signals entspricht.

Wenn ein Radarecho von einem georteten Objekt empfangen wird, ist somit die Frequenz des Mischprodukts von der Signallaufzeit und damit vom Abstand des Objekts abhängig, aber aufgrund des Dopplereffektes auch von der Relativgeschwindigkeit des reflektierenden Objekts. Jedes geortete Objekt zeichnet sich deshalb im Spektrum, das aus dem Mischprodukt gebildet wird, auf jeder Modulationsrampe als ein Peak bei der vom Abstand und der Relativgeschwindigkeit abhängigen Frequenz ab. Durch Vergleich der Frequenzlagen von Peaks, die von demselben Objekt stammen, auf Modulationsrampen mit unterschiedlicher Steigung lassen sich dann der Abstand und die Relativgeschwindigkeit des Objekts bestimmen.

Auch Regentropfen oder aufspritzende Gischt stellen in diesem Sinne "Objekte" dar, die bei nicht zu großen Abständen vom Radarsensor, beispielsweise bei Abständen bis zu etwa 10 - 50 m, einen schwachen aber immerhin noch detektierbaren Peak im Spektrum hinterlassen. Bei stärkerem Niederschlag addieren sich diese Peaks in dem Frequenzbereich, der dem oben genannten Abstandsbereich entspricht, zu einem Untergrundsignal, dem sogenannten Regenclutter. Die Leistung dieses Regenclutters ist somit ein Maß für das Vorhandensein und die Stärke von Niederschlag.

### Offenbarung der Erfindung

Aufgabe der Erfindung ist es, ein Verfahren zur Detektion von Niederschlag anzugeben, das robuster gegenüber Störeinflüssen ist.

Diese Aufgabe wird erfindungsgemäß dadurch gelöst, daß das Ortungssignal zusätzlich über einen zweiten Abstandsbereich integriert wird, der oberhalb des Grenzabstands liegt, und daß für die Feststellung von Niederschlag die Integrale über den ersten und zweiten Abstandsbereich miteinander verglichen werden.

### Vorteile der Erfindung

Das erfindungsgemäße Verfahren hat den Vorteil, daß die Niederschlagsdetektion weniger stark durch Störeinflüsse beeinträchtigt wird, etwa durch Temperatur- oder Alterungseffekte der elektronischen Komponenten des Radarortungsgerätes, Effekte des Einbauortes und der Einbaubedingungen des Radarortungsgerätes im Fahrzeug, spezielle Eigenschaften des Ortungsgerätes als solches, und dergleichen. Dadurch wird insgesamt eine verbesserte Serientauglichkeit und Robustheit des Radarortungssystems erreicht. Bei einem FMCW-Radar kommt als weiterer Vorteil hinzu, daß das Verfahren auch unabhängig von der speziellen Wahl der Parameter der Modulationsrampen ist.

Die genannten Störeinflüsse beeinflussen die über den ersten und den zweiten Abstandsbereich gebildeten Integrale in gleicher Weise, während der Regenclutter nur den Wert des ersten Integrals erhöht aber nicht den des zweiten. Indem zur Feststellung von Niederschlag die beiden Integrale miteinander verglichen werden, lassen sich somit die genannten Störeinflüsse weitgehend eliminieren.

Vorteilhafte Ausgestaltungen und Weiterbildungen der Erfindung sind in den Unteransprüchen angegeben.

In einer vorteilhaften Ausführungsform des erfindungsgemäßen Verfahrens werden echte Objekte wie vorausfahrende Fahrzeuge und dergleichen durch eine Filterprozedur gewissermaßen ausgeblendet, so daß die anschließenden Integrationen im wesentlichen nur noch diejenigen Signalanteile erfassen, die durch Rauschen und Regenclutter verursacht sind.

Beispielsweise handelt es sich bei dem Integranden um eine Detektionsschwelle, die durch eine Rausch-Schätzung gewonnen wird und zugleich dazu dienen kann, die echten Objektpeaks vom Rauschuntergrund (und gegebenenfalls dem Regenclutter) zu unterscheiden. Eine solche Rausch-Schätzung kann beispielsweise mit einem Rangordnungsfilter realisiert werden und ist in der Literatur unter dem Begriff "Ordered Statistic Constant False Alarm Rate" (OS-CFAR) bekannt (A. Ludloff: Praxiswissen - Radar und Radarsignalverarbeitung, 3. Auflage, Vieweg Verlag 2002). Aufgrund ihrer Adaptivität paßt sich die Detektionsschwelle der jeweiligen Stärke des Regenclutters an, doch wird sie andererseits nicht durch schmalbandige Einzelpeaks beeinflußt, die durch "kompakte" Radarziele wie z. B. Fahrzeuge verursacht werden.

### Kurze Beschreibung der Zeichnungen

Ein Ausführungsbeispiel der Erfindung ist in den Zeichnungen dargestellt und in der nachfolgenden Beschreibung näher erläutert.

Es zeigen:
- Fig. 1: ein Blockdiagramm eines Radarortungsgerätes, mit dem das erfindungsgemäße Verfahren ausführbar ist;
- Fig. 2: eine Prinzipskizze zur Detektion von Niederschlag;
- Fig. 3: ein Beispiel einer Radarzelle für die Detektion von Niederschlag; und
- Fig. 4 und 5: Beispiele für die Auswertung von Ortungssignalen nach dem erfindungsgemäßen Verfahren.

### Ausführungsformen der Erfindung

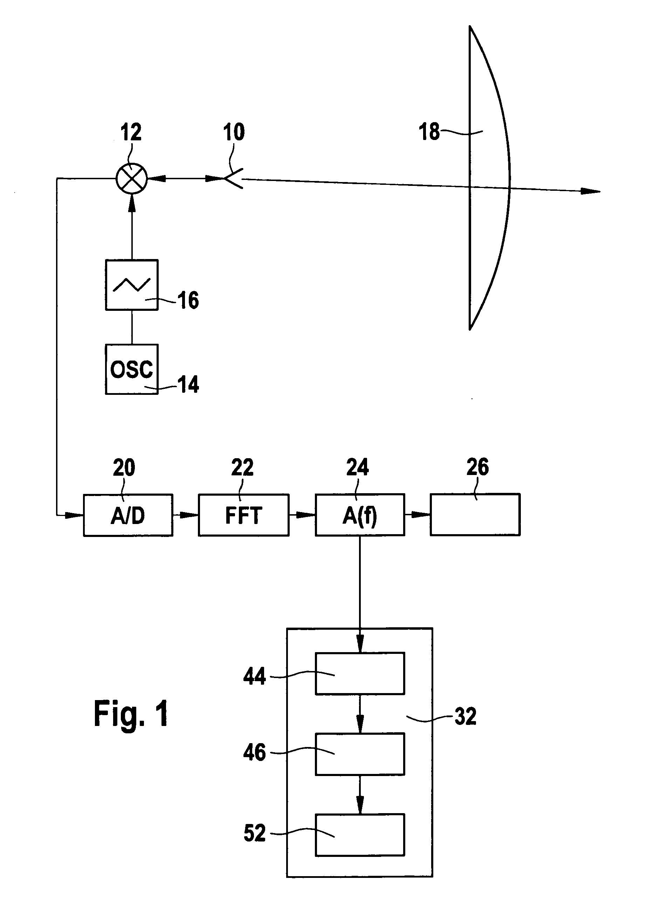

Das in Fig. 1 gezeigte Radarortungsgerät weist eine Antenne 10 auf, der über einen Mischer 12 ein von einem Oszillator 14 erzeugtes und von einem Modulator 16 frequenzmoduliertes Sendesignal zugeführt wird (FMCW-Radar). Das von der Antenne 10 emittierte Signal wird von einer Radarlinse 18 gebündelt.

Wenn von dem Radarortungsgerät ein (in Fig. 1 nicht gezeigtes) Objekt geortet wird, so wird das an dem Objekt reflektierte Signal durch die Linse wieder auf dieselbe Antenne 10 gebündelt, die das Sendesignal emittiert hat (monostatisches Antennenkonzept). Im Mischer 12 wird das empfangene Signal mit einem Anteil des Sendesignals gemischt, und als Mischprodukt erhält man ein zeitabhängiges Signal (Zwischenfrequenzsignal), das in einer Analog/Digital-Wandlerstufe 20 gesampelt und digitalisiert wird. In einer Transformationsstufe 22 wird das digitalisierte Signal beispielsweise durch Schnelle Fourier Transformation (FFT) in ein Spektrum umgewandelt, im folgenden als Ortungssignal 24 bezeichnet, das die Abhängigkeit der Amplitude des Mischprodukts von der Frequenz f angibt. Bei Vernachlässigung des Doppler-Effektes ist die Frequenz f proportional zum Abstand R des jeweiligen Reflexionsziels. Die Relativgeschwindgkeit der Regentropfen ist dem Betrage nach etwa gleich der Eigengeschwindigkeit des Fahrzeugs, das mit dem Radarsystem ausgerüstet ist. Diese Relativgeschwindgkeit führt deshalb zu einer Frequenzverschiebung, die sich rechnerisch bestimmen läßt. Zumindest innerhalb gewisser Grenzen kann somit gesagt werden, daß das Ortungssignal 24 mittelbar auch ein Maß für die empfangene Leistungsdichte als Funktion des Abstands R darstellt. Im folgenden soll deshalb - etwas vereinfachend - das Ortungssignal als Funktion des Abstands betrachtet werden. In einer Auswertungsstufe 26 wird das Ortungssignal 24 weiter ausgewertet, um die Abstände und Relativgeschwindgkeiten der georteten Objekte und - bei einem Mehrstrahlradar - auch deren Azimutwinkel zu bestimmen.

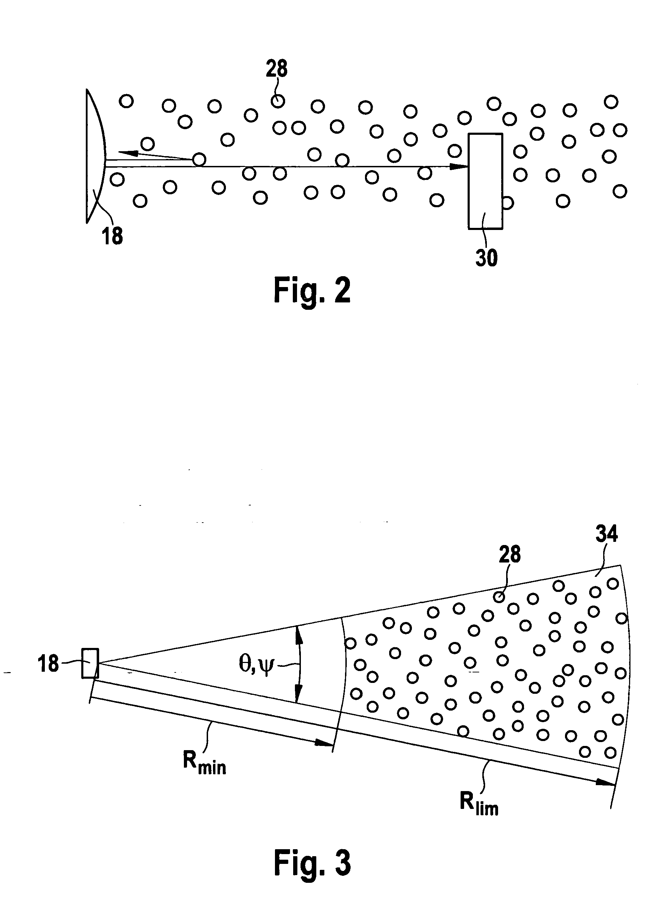

In Fig. 2 ist Niederschlag in der Form von Tropfen 28 dargetellt, die den gesamten Raum zwischen der Radarlinse 18 und einem zu ortenden Objekt 30 ausfüllen. Jeder der Tropfen 28 wirkt wie ein kleines Reflexionsziel, das einen kleinen Peak im Spektrum, d. h., im Ortungssignal 24 hinterläßt. Diese Peaks sind über ein breites Frequenzband verstreut und tragen als sogenannter Regenclutter zum Untergrund bei, allerdings nur bis zu einer bestimmten Frequenzgrenze, die dem Grenzabstand Rₗᵢₘ entspricht, in dem noch ein Radarecho von den einzelnen Regentropfen nachweisbar ist (in der Praxis ca. 10 bis 50 m). Andererseits wird durch die Reflexionen an den einzelnen Tropfen 28 das Radarsignal geschwächt, das das Objekt 30 erreicht und nach Reflexion wieder vom Ortungsgerät empfangen wird. Das kann, etwa bei sehr starkem Regen, dazu führen, daß die Empfindlichkeit des Ortungsgerätes erheblich eingeschränkt ist.

Das Radarortungsgerät weist deshalb eine Detektionseinrichtung 32 auf, die es erlaubt, das Vorhandensein von Niederschlag festzustellen und die Stärke des Niederschlags quantitativ zu bewerten, so daß sich abschätzen läßt, in welchem Ausmaß die Funktionsfähigkeit des Ortungssystems durch Niederschlag beeinträchtigt wird. Zu diesem Zweck wertet die Detektionseinrichtung 32 das Ortungssignal 24 aus, wie im folgenden näher beschrieben wird.

Fig. 3 zeigt schematisch eine Radarzelle 34, innerhalb derer Regenclutter detektiert werden kann. Die Radarzelle 34 erstreckt sich in der Horizontalen über einen bestimmten Azimutwinkelbereich und in der Vertikalen über einen bestimmten Elevationswinkelbereich . Diese Winkelbereiche sind durch die Form der vom Radarortungsgerät ausgehenden Radarkeulen bestimmt. In radialer Richtung reicht die Radarzelle 34 von einem gewissen Mindestabstand Rₘᵢₙ, unterhalb dessen eine verläßliche Ortung von Reflexionszielen nicht mehr möglich ist, bis zu dem erwähnten Grenzabstand Rₗᵢₘ, bis zu dem das Radarecho der einzelnen Tropfen 28 noch als Regenclutter meßbar ist.

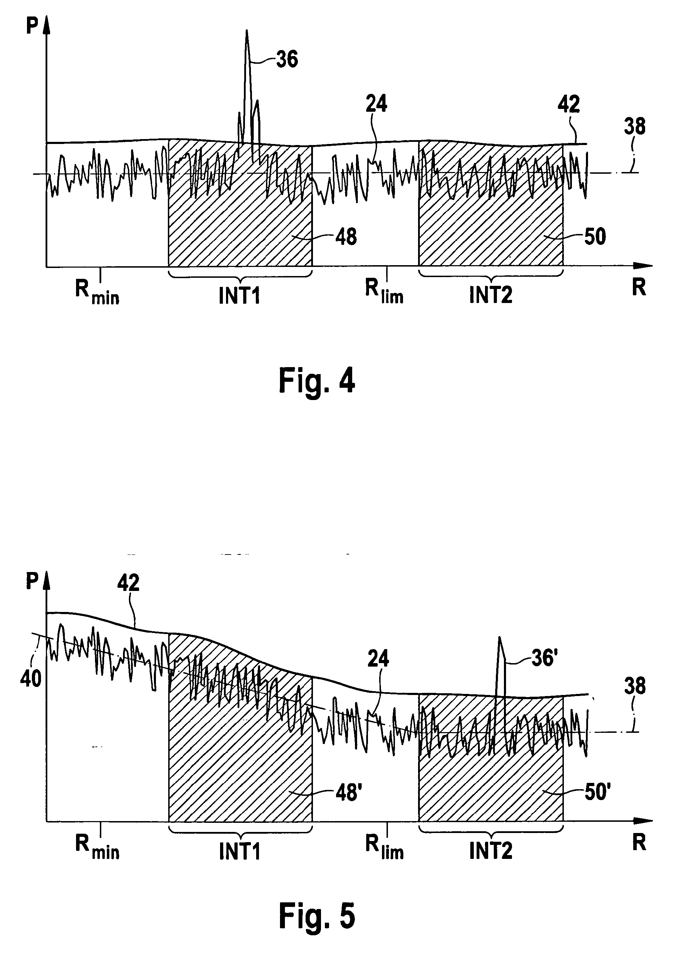

Fig. 4 zeigt einen typischen Verlauf des Ortungssignals 24 für den Fall, daß kein Niederschlag vorhanden ist. Im gezeigten Beispiel repräsentiert ein Peak 36, der sich deutlich vom Rauschuntergrund 38 abhebt, ein geortetes Objekt, dessen Abstand kleiner ist als der Grenzabstand Rₗᵢₘ für die Detektion von Niederschlag. Für alle übrigen Frequenzen und Abstände ist die mittlere Höhe des Ortungssignals 24 durch den Pegel des Rauschuntergrunds 38 gegeben, der näherungsweise über den gesamten Abstandsbereich konstant ist.

Zum Vergleich zeigt Fig. 5 den Verlauf des Ortungssignals 24 mit Niederschlag. Ein Peak 36' repräsentiert hier ein Objekt (Fahrzeug), dessen Abstand größer ist als der Grenzabstand Rₗᵢₘ. Die Schwächung des Radarsignals durch die Reflexion an den Tropfen 28 führt zunächst dazu, daß die Höhe des Peaks 36' verringert ist. Andererseits bewirkt die Reflexion an diesen Tropfen den erwähnten Regenclutter, der in Fig. 5 außerhalb des Peaks 36 in Form eines Untergrundsignals 40 zu erkennen ist, das höher ist als der Rauschuntergrund 38 und außerdem mit zunehmendem Abstand abnimmt. Ab dem Grenzabstand Rₗᵢₘ ist der Regenclutter nicht mehr vom normalen Rauschuntergrund zu unterscheiden und daher nicht mehr detektierbar.

Eine Detektion von Niederschlag ist nun im Prinzip dadurch möglich, daß die Leistungsdichte des Ortungssignals 24 über ein Abstandsintervall INT1 integriert wird, das zwischen dem Mindestabstand Rₘᵢₙ und dem Grenzabstand Rₗᵢₘ liegt. Da der normale Rauschuntergrund 38 für einen gegebenen Typ des Radarortungsgerätes bekannt ist, kennt man den Wert, der im niederschlagsfreien Fall für dieses Integral zu erwarten ist, und wenn der aktuelle Wert des Integrals deutlich größer ist, so deutet dies auf die Anwesenheit von Niederschlag hin.

Wenn sich jedoch, wie in dem in Fig. 4 illustrierten Fall, mindestens ein Objekt (Peak 36) in dem Abstandsintervall INT1 befindet, über das bei der Niederschlagsdetektion integriert werden soll, so würde auch im niederschlagsfreiem Fall der Peak 36 dazu führen, daß der Wert des Integrals zunimmt, und es ließe sich nicht entscheiden, ob die Zunahme des Integrals allein durch das Objekt oder zusätzlich auch durch Niederschlag verursacht wird.

Bei dem hier vorgeschlagenen Verfahren wird deshalb nicht unmittelbar das Ortungssignal 24 integriert, sondern zunächst wird dieses Ortungssignal einer Filterprozedur unterzogen, beispielsweise einer Rausch-Schätzung, mit der für jeden Frequenz- bzw. Abstandswert eine Detektionsschwelle 42 bestimmt wird, die ein von einem Objekt verursachter Peak 36, 36' mindestens überragen muß, damit das entsprechende Objekt sicher detektiert werden kann. In Fig. 1 umfaßt demgemäß die Detektionseinrichtung 32 eine Filterstufe 44 für die Rausch-Schätzung und eine Integrationsstufe 46 für die Integration des gefilterten Signals, d. h., der Detektionsschwelle 42.

Wie man in Fig. 4 und 5 erkennt, verläuft die Detektionsschwelle 42 jeweils etwa parallel zum Rauschuntergrund 38 bzw. zum Untergrundsignal 40 (spezieller: in etwa gleichbleibendem Abstand oberhalb dieses Untergrundsignals), während sie jeden von einem Objekt herrührenden Peak 36, 36' gewissermaßen "ausblendet". Wenn man nun die Detektionsschwelle 42 über das Intervall INT1 integriert, so ist das erhaltene Integral (In Fig. 4 und 5 repräsentiert durch eine Fläche 48 bzw 48') unabhängig davon, ob sich in dem Intervall INT1 ein Objekt befindet oder nicht.

Um auch eine größere Unabhängigkeit gegenüber anderen Störeinflüssen zu erreichen, insbesondere gegenüber Temperatur- und Alterungseffekten, die die Empfindlichkeit des Radarortungsgerätes beeinflussen, speziellen Einbaubedingungen des Radarortungsgerätes und dergleichen, wird bei dem hier vorgeschlagenen Verfahren die Detektionsschwelle 42 nicht nur über das Intervall INT1 integriert, das unterhalb des Grenzabstands Rₗᵢₘ liegt, also in den Bereichen, in denen Regenclutter auftreten kann, sondern auch über einen (beispielsweise gleich großen) zweiten Abstandsbereich INT2, der oberhalb des Grenzabstands Rₗᵢₘ liegt, also in dem Bereich, in dem die Leistungsdichte außerhalb von Objektpeaks nur durch den Rauschuntergrund 38 bestimmt ist. Das entsprechende Integral wird in Fig. 4 und 5 durch eine Fläche 50 bzw. 50' repräsentiert.

Im Fall der Fig. 4, also ohne Niederschlag, erhält man für die durch die Flächen 48 und 50 repräsentierten Integrale etwa den gleichen Wert. Temperatureinflüsse und ähnliche Störeinflüsse wirken sich in der Regel auf beide Integrale in gleicher Weise aus.

In Fig. 5, also bei Niederschlag, ist dagegen der Wert des über den ersten Abstandsbereich INT1 gebildeten Integrals (Fläche 48') durch den Regenclutter erhöht, während der Wert des über den zweiten Abstandsbereich INT2 gebildeten Integrals (Fläche 50') im wesentlichen gleich geblieben ist.

Die in Fig. 1 gezeigte Detektionseinrichtung 32 weist eine Vergleichsstufe 52 auf, die dazu dient, die über die ersten und zweiten Abstandsbereiche INT1 und INT2 gebildeten Integrale miteinander zu vergleichen und beispielsweise das Verhältnis dieser beiden Integrale zueinander zu bestimmen. Dieses Verhältnis liefert unmittelbar ein verläßliches Maß für die Stärke des Niederschlags, wobei ein Verhältnis in der Nähe von 1 den niederschlagsfreien Zustand repräsentiert. Von Temperaturdrift und ähnlichen Störeinflüssen ist dieses Verhältnis wesentlich weniger stark beeinflußt als die absolute Höhe der Integrale selbst. Auf diese Weise wird ein erhöhte Robustheit gegenüber den Störeinflüssen erreicht.

Während im gezeigten Beispiel das Spektrum des Zwischenfrequenzsignals ausgewertet wird, ist es in einer modifizierten Ausführungsform auch möglich, auf entsprechtende Weise das in der Analog/Digital-Wandlerstufe 20 erhaltene Zeitsignal auszuwerten.

## Patentansprüche

1. Verfahren zur Detektion von Niederschlag mit einem Radarortungsgerät für Kraftfahrzeuge, das zur Ortung von Objekten (30) im Umfeld des Fahrzeugs ausgebildet ist, bei welchem Verfahren ein Ortungssignal (24), das ein Maß für die empfangene Leistungsdichte als Funktion des Abstands (R) darstellt, über einen ersten Abstandsbereich (INT1) integriert wird, der unterhalb eines Grenzabstands (Rₗᵢₘ) für die Detektion von Niederschlag liegt, wobei der Grenzabstand (Rₗᵢₘ) der Abstand ist, bis zu dem das Radarecho der einzelnen Tropfen (28) noch als Regenclutter meßbar ist, **dadurch gekennzeichnet, daß** das Ortungssignal (24) zusätzlich über einen zweiten Abstandsbereich (INT2) integriert wird, der oberhalb des Grenzabstands (Rₗᵢₘ) liegt, und daß für die Feststellung von Niederschlag die Integrale über den ersten und zweiten Abstandsbereich miteinander verglichen werden.

2. Verfahren nach Anspruch 1, bei dem das Ortungssignal (24) vor der Integration einer Filterung (44) unterzogen wird, die durch geortete Objekte verursachte Peaks (36, 36') unterdrückt, so daß das gefilterte Signal (42) ein Maß für das Rauschniveau als Funktion des Abstands (R) bildet.

3. Verfahren nach Anspruch 2, bei dem das gefilterte Signal eine Detektionsschwelle (42) ist, die es erlaubt, anhand des Kriteriums, daß ein Peak (36, 36') im Ortungssignal (24) die Detektionsschwelle (42) übersteigt, zu entscheiden, ob der Peak ein geortetes Objekt repräsentiert.

4. Radarortungsgerät für Kraftfahrzeuge, das zur Ortung von Objekten im Vorfeld des Fahrzeugs ausgebildet ist, **gekennzeichnet durch** eine Detektionseinrichtung (32), in der das Verfahren nach einem der Ansprüche 1 bis 3 implementiert ist.

## Claims

1. Method for the detection of precipitation using a radar locating device for motor vehicles, which is designed to determine the location of objects (30) in the surroundings of the vehicle, in which method a locating signal (24) which constitutes a measure of the received power density as a function of the distance (R) is integrated over a first distance range (INT1) which is below a limiting distance (Rₗᵢₘ) for the detection of precipitation, wherein the limiting distance (Rₗᵢₘ) is a distance up to which the radar echo of the individual droplets (28) can still be measured as a rain clutter, **characterized in that** the locating signal (24) is additionally integrated over a second distance range (INT2) which is above the limiting distance (Rₗᵢₘ), and **in that** for the determination of precipitation the integrals over the first and second distance ranges are compared with one another.

2. Method according to Claim 1, in which, before the integration, the locating signal (24) is subject to filtering (44) which suppresses peaks (36, 36') caused by located objects, with the result that the filtered signal (24) forms a measure of the noise level as a function of the distance (R).

3. Method according to Claim 2, in which the filtered signal is a detection threshold (42) which makes it possible, on the basis of the criterion that a peak (36, 36') in the locating signal (24) exceeds the detection threshold (42), to decide whether the peak represents a located object.

4. Radar locating device for motor vehicles, which is designed to determine the location of objects in the area in front of the vehicle, **characterized by** a detection device (32) in which the method according to one of Claims 1 to 3 is implemented.

## Revendications

1. Procédé de détection des précipitations à l'aide d'un dispositif de localisation par radar pour véhicules à moteur conçu pour localiser des objets (30) dans l'environnement du véhicule, dans lequel un signal de localisation (24) représentant une mesure de l'ampleur de la puissance reçue en fonction de la distance (R) est intégré sur une première plage de distance (INT1) inférieure à une distance limite (Rₗᵢₘ) permettant la détection des précipitations, la distance limite (Rₗᵢₘ) étant la distance jusqu'à laquelle l'écho de radar des gouttes (28) individuelles reste mesurable comme fouillis de pluie, **caractérisé en ce que** le signal de localisation (24) est en outre intégré sur une deuxième plage de distance (INT2) supérieure à la distance limite (Rₗᵢₘ) et que l'intégrale de la première et de la deuxième plage de distance sont comparées l'une avec l'autre pour déterminer les précipitations.

2. Procédé selon la revendication 1, dans lequel le signal de localisation (24) est soumis à l'intégration d'un filtrage (44) qui atténue les pics (36, 36') provoqués par des objets localisés de façon à ce que le signal filtré (42) constitue une mesure du niveau de bruit en fonction de la distance (R).

3. Procédé selon la revendication 2, dans lequel le signal filtré est un seuil de détection (42) permettant de déterminer, à l'aide du critère permettant de décider si un pic (36, 36') repéré dans le signal de localisation (24) dépasse le seuil de détection (42), si le pic indique la présence d'un objet localisé.

4. Dispositif de localisation par radar pour véhicules à moteur permettant de localiser des objets dans l'environnement du véhicule, **caractérisé par** la présence d'un dispositif de détection (32) dans lequel le procédé selon l'une quelconque des revendications 1 à 3 est mis en oeuvre.
